(19) Europäisches Patentamt
European Patent Office
Office européen des brevets

(11) **EP 3 456 164 A1**

(12) **EUROPÄISCHE PATENTANMELDUNG**

(43) Veröffentlichungstag:
20.03.2019 Patentblatt 2019/12

(51) Int Cl.:
*A01B 69/08* (2006.01)

(21) Anmeldenummer: 18192986.0

(22) Anmeldetag: 06.09.2018

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 13.09.2017 DE 102017216196

(71) Anmelder: Deere & Company
Moline, IL 61265 (US)

(72) Erfinder: Billich, Manuel
68163 Mannheim (DE)

(74) Vertreter: Dehnhardt, Florian Christopher
John Deere GmbH & Co. KG
Global Intellectual Property Services
John-Deere-Straße 70
68163 Mannheim (DE)

(54) **VERFAHREN ZUR QUERVERSCHIEBUNG EINES MÄHWERKS EINES LANDWIRTSCHAFTLICHEN FAHRZEUGS**

(57) Die Erfindung betrifft ein Verfahren zur Querverschiebung ($b_Q$) eines Frontmähwerks (20) und/oder mindestens eines Heckmähwerks (22-1, 22-2) eines landwirtschaftlichen Fahrzeugs (10) entlang einer quer zu einer Längsachse (18) des Fahrzeugs (10) verlaufenden Querrichtung (24). Die Querverschiebung ($b_Q$) wird in Abhängigkeit von einem ermittelten Lenkwinkel ($\alpha$) des Fahrzeugs (10) derart dimensioniert, dass während einer Kurvenfahrt des Fahrzeugs (10) eine Überlappung (bo) zwischen einer Mähfläche (30) des Frontmähwerks (20) und einer Mähfläche (32, 38) des Heckmähwerks (22-1, 22-2) entlang der Querrichtung (24) generiert wird.

FIG. 1

**Beschreibung**

Die Erfindung betrifft ein Verfahren zur Querverschiebung eines Frontmähwerks und/oder mindestens eines Heckmähwerks eines landwirtschaftlichen Fahrzeugs.

Damit das Mähen von Erntegut über die komplette Arbeitsbreite eines landwirtschaftlichen Fahrzeugs sichergestellt ist, werden ein Frontmähwerk und ein Heckmähwerk derart abgestimmt, dass bei einer Geradeausfahrt eine geringe Überlappung der Mähflächen von Front- und Heckmähwerk entsteht. Bei Kurvenfahrten reicht diese Überlappung allerdings oft nicht aus, um ungemähte Bereiche zu vermeiden.

Es ist daher Aufgabe der vorliegenden Erfindung, ein Verfahren anzugeben, mit dem nicht gemähte Bereiche zwischen Front- und Heckmähwerk auch bei Kurvenfahrten des landwirtschaftlichen Fahrzeugs auf einfache Weise vermieden werden können.

Diese Aufgabe wird durch ein Verfahren mit den Merkmalen des Patentanspruchs 1 gelöst.

Weitere vorteilhafte Ausgestaltungen des erfindungsgemäßen Verfahrens gehen aus den Unteransprüchen hervor.

Das Verfahren gemäß Patentanspruch 1 ermöglicht eine Querverschiebung eines Frontmähwerks und/oder eines Heckmähwerks eines landwirtschaftlichen Fahrzeugs, z.B. eines Traktors. Diese Querverschiebung erfolgt entlang einer quer zu einer Längsachse des Fahrzeugs verlaufenden Querrichtung. Dabei wird die Querverschiebung in Abhängigkeit von einem ermittelten Lenkwinkel des Fahrzeugs derart dimensioniert, dass während einer Kurvenfahrt des Fahrzeugs eine Überlappung zwischen einer Mähfläche des Frontmähwerks und einer Mähfläche eines mit dem Frontmähwerk korrespondierenden Heckmähwerks entlang der Querrichtung generiert wird.

Dieses Verfahren ermöglicht eine automatisierte Querverschiebung eines Front- und/oder Heckmähwerks für eine gewünschte Überlappung der frontseitig und heckseitig erzeugten Mähflächen entlang der Querrichtung. Hierdurch wird der Fahrer des Fahrzeugs entlastet, da er keine manuelle Querverschiebung mehr durchführen muss. Innerhalb des technisch möglichen Querverschiebungsbereichs sind nicht gemähte Bereiche durch etwaige Fehlbedienungen des Fahrers ausgeschlossen. Die Arbeitsqualität des Mähvorgangs wird verbessert und die Flächenleistung erhöht.

Das Verfahren kann mittels einer Regeleinheit zur Regelung der Querverschiebung durchgeführt werden. Die Regelungs-Funktion kann beispielsweise in ein vorhandenes Spurführungssystem des Fahrzeugs integriert werden.

Der vorgenannte, zu ermittelnde Lenkwinkel kann z.B. messtechnisch erfasst werden. Bei Fahrzeugen mit einem Spurführungssystem kann der jeweilige Wert des Lenkwinkels ohne zusätzliche technischen Aufwand zur Verfügung gestellt werden.

Falls der Fahrer eine Kurve fahren möchte, die aufgrund des ermittelten Lenkwinkels und eines technisch begrenzten Querverschiebungsbereichs zu nicht gemähten Bereichen führen würde, wird vorzugsweise eine entsprechende Information (z.B. visuell oder akustisch) für den Fahrer bereitgestellt.

Vorzugsweise wird die Querverschiebung in Abhängigkeit von mindestens einer der folgenden Größen durchgeführt:

-   einem Radstand l des Fahrzeugs,
-   einem Front-Längsabstand entlang der Längsachse des Fahrzeugs zwischen einer Vorderachse des Fahrzeugs und einem Frontmähwerk bzw. dessen Schnittbereich,
-   einem Heck-Längsabstand entlang der Längsachse des Fahrzeugs zwischen einer Hinterachse des Fahrzeugs und einem Heckmähwerk bzw. dessen Schnittbereich,
-   einer Mähbreite des Frontmähwerks entlang der Querrichtung,
-   einem Abstand entlang der Querrichtung zwischen einem ersten Heckmähwerk und einem zweiten Heckmähwerk, und
-   einer vorbestimmten Überlappung zwischen dem Frontmähwerk und dem Heckmähwerk entlang der Querrichtung.

Die Werte der vorgenannten Größen können zur Durchführung des Verfahrens vorteilhaft mit geringem oder ohne zusätzlichen technischen Aufwand bereitgestellt werden. So ist der Radstand des Fahrzeugs als Abstand zwischen einer Vorderachse und einer Hinterachse des Fahrzeugs eindeutig bekannt. Der Front-Längsabstand und der Heck-Längsabstand können z.B. über eine Benutzereingabe der Regeleinheit oder einem System zur Regelung der Querverschiebung mitgeteilt werden. Der Abstand zwischen zwei Heckmähwerken bezieht sich vorzugsweise auf einen in Querrichtung verlaufenden Abstand zwischen den der Fahrzeug-Längsachse zugewandten Schnittkanten dieser Heckmähwerke oder ihrer Mähbalken in einer standardmäßigen Ausgangslage ohne Querverschiebung.

Der vorgenannte Abstand der Schnittkanten zweier Mähwerke voneinander sowie die Mähbreite des Frontmähwerks sind technisch einfach ermittelbar und können der Regeleinheit oder dem Regelsystem z.B. ebenfalls über eine Benutzereingabe mitgeteilt werden. Die vorbestimmte Überlappung bezieht sich je nach Anwendungsfall auf die kurveninnere Seite oder kurvenäußere Seite einer Kurvenfahrt. Diese Überlappung kann als ein fester Wert der Regeleinheit bzw. des Regelsystems vorgegeben sein oder alternativ mittels einer Benutzereingabe veränderbar definiert werden.

In einer bevorzugten Ausführungsform wird die Querverschiebung durch mindestens einen Grenzwert begrenzt. Insbesondere wird die Querverschiebung entlang der Querrichtung mit zwei einander gegenüberliegenden Grenzwerten begrenzt. Der mindestens eine Grenzwert unterstützt eine definierte Funktionsweise der beteiligten Mähwerke für die gewünschte Überlappung der Mähflächen. Der mindestens eine Grenzwert wird in einer Ausführungsform durch eine technisch maximal oder minimal mögliche bzw. sinnvolle Querverschiebung des jeweiligen Mähwerks definiert. Alternativ kann ein Grenzwert auch durch eine entsprechende Benutzereingabe veränderbar vorgegeben werden.

Ein in Querrichtung verschiebbares Mähwerk (z.B. Frontmähwerk oder Heckmähwerk) weist zu seiner Querverschiebung vorzugsweise einen geeigneten Aktor auf. Hierdurch muss die Regeleinheit bzw. das Regelsystem lediglich den Aktor ansteuern, um eine bestimmte Querverschiebung zu regeln und somit die gewünschte Überlappung zu erreichen. Insbesondere wird hierbei ohne zusätzlichen technischen Aufwand ein Aktor verwendet, der routinemäßig bereits in einem herkömmlichen Mähwerk eingebaut ist. Somit kann ein herkömmliches Mähwerk mit einer entsprechenden Regelung bzw. Ansteuerung des Aktors ergänzt werden, um das Verfahren technisch einfach durchzuführen.

Der Aktor ist in einer bevorzugten Ausführung als ein Hydraulikzylinder ausgeführt. Eine Arbeitslänge des Hydraulikzylinders kann dann durch Einstellung einer Längenänderung gesteuert werden, um die gewünschte Überlappung zu erreichen. Für diese Steuerung der Arbeitslänge des Hydraulikzylinders ist ein Wegeventil vorgesehen. Das Wegeventil ist beispielsweise ein 4/3-Wegeventil. Ist die Funktion zur Durchführung des Verfahrens in das Fahrzeug integriert, kann ein dort eingebautes Ventil als Wegeventil verwendet werden. Alternativ kann die Funktion zur Durchführung des Verfahrens mitsamt dem Wegeventil in dem jeweiligen Mähwerk (Front- oder Heckmähwerk) eingebaut sein.

Andere Ausführungsformen des Aktors sind denkbar. Beispielsweise kann der Aktor eine Zahnstange aufweisen, welche von einem Elektromotor angetrieben wird.

Je nach technischer Ausführung kann eine Ansteuerung des Aktors und dessen Längenänderung oder Bewegung längenmäßig eine identische Querverschiebung des Mähwerks bedeuten oder entsprechend eines Übersetzungsverhältnisses längenmäßig einer anderen Querverschiebungs-Länge entsprechen. Bei einem ermittelten Fahrzeug-Lenkwinkel wird die notwendige Querverschiebung festgestellt und dann in Abhängigkeit des Übersetzungsverhältnisses eine entsprechende Soll-Bewegung, Längenänderung oder dergleichen des Aktors berechnet.

Vorzugsweise sind im heckseitigen Bereich des Fahrzeugs beiderseits einer Fahrzeug-Längsachse jeweils ein Heckmähwerk vorgesehen. Diese können jeweils in Querrichtung - insbesondere unabhängig voneinander - verschoben werden. Hierdurch kann in einfacher Weise eine Anpassung der Arbeitsbreite für den Mähvorgang erzielt werden. Dies kann dazu genutzt werden, ein optimales Verhältnis von einer Flächenleistung des Mähvorgangs und einer Überlappung zwischen frontseitiger und heckseitiger Mähfläche zu unterstützen.

Das Verfahren wird vorzugsweise bei einem Mähvorgang, also bei einem Front- und Heckmähwerk, angewendet. In weiteren Anwendungen kann das Verfahren zur Erzielung einer gewünschten Querverschiebung und Überlappung aber auch auf andere Anbaugeräte eines landwirtschaftlichen Fahrzeugs angewendet werden, wenn es eine Kombination aus einem frontseitigen Anbaugerät und einem heckseitigen Anbaugerät aufweist (z.B. eine Mulcherkombination).

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1     eine schematische Draufsicht eines landwirtschaftlichen Fahrzeugs mit angedeuteter Querverschiebung eines Frontmähwerks während einer Kurvenfahrt,

Fig. 2     eine schematische Darstellung einer Ventileinheit für eine Querverschiebung des Frontmähwerks gemäß Fig. 1,

Fig. 3     eine schematische Draufsicht eines landwirtschaftlichen Fahrzeugs mit angedeuteter Querverschiebung eines Heckmähwerks während einer Kurvenfahrt, und

Fig. 4     eine schematische Darstellung zweier Ventileinheiten für eine Querverschiebung der beiden Heckmähwerke gemäß Fig. 3.

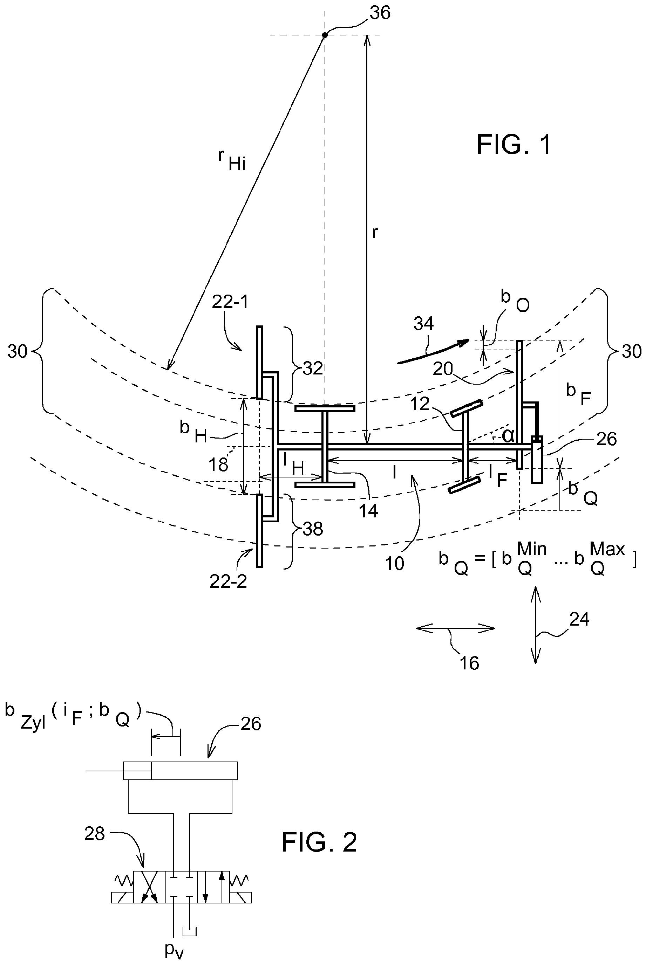

Fig. 1 zeigt schematisch angedeutet ein landwirtschaftliches Fahrzeug 10 in Form eines Traktors mit einer Vorderachse 12 und einer Hinterachse 14. Der Abstand beider Achsen 12, 14 bildet einen Radstand l. Das Fahrzeug 10 weist eine in seiner Längsrichtung 16 angeordnete Fahrzeug-Längsachse 18 auf. Das Fahrzeug 10 trägt ein Frontmähwerk 20, welches in einem entlang der Längsachse 18 ausgerichteten Front-Längsabstand $l_F$ bezüglich der Vorderachse 12 angeordnet ist. Mit $b_F$ ist eine Mähbreite des Frontmähwerks 20 oder seines Mähbalkens in Querrichtung 24 bezeichnet. Im heckseitigen Bereich des Fahrzeugs 10 sind zwei Heckmähwerke 22-1, 22-2 angeordnet. Zwischen ihnen und der Hinterachse 14 ist ein in Längsrichtung 16 verlaufender Heck-Längsabstand $l_H$ definiert. Entlang einer quer zur Längsrichtung 16 angeordneten Querrichtung 24 weist das Heckmähwerk 22-1 mit einer Schnittkante einen Abstand $b_H$ zu der zugewandten Schnittkante des zweiten Mähwerks 22-2 auf. Dies entspricht einer standardmäßigen Ausgangslage der Heckmähwerks 22-1, 22-2 ohne Querverschiebung entlang der Querrichtung 24.

In Fig. 1 ist ein Aktor in Form eines Hydraulikzylinders 26 als integrierter Bestandteil des Frontmähwerks 20 schematisch dargestellt. Je nach Ansteuerung bewirkt der Aktor bzw. Hydraulikzylinder 26 eine Querverschiebung des Frontmähwerks 20 entlang der Querrichtung 24. Ganz allgemein bewirkt eine in Fig. 2 dargestellte spezifische Längenänderung $b_{Zyl}$ einer Arbeitslänge des Hydraulikzylinders 26 eine als notwendig berechnete Querverschiebung $b_Q$ des Frontmähwerks 20. Dabei ist die spezifische Längenänderung $b_{Zyl}$ von einer Übersetzung $i_F = b_Q/b_{Zyl}$ zwischen der Querverschiebung $b_Q$ und der Längenänderung $b_{Zyl}$ abhängig. Die jeweils als erforderlich berechnete Längenänderung $b_{Zyl}$ wird erreicht, indem eine Ventileinheit 28 den Hydraulikzylinder 26 entsprechend ansteuert. Dabei steuert die Ventileinheit 28 einen hydraulischen Versorgungsdruck $p_V$ für den Hydraulikzylinder 26. In Fig. 2 ist die Ventileinheit 28 als ein 4/3-Wegeventil ausgebildet.

In der Ausführungsform gemäß Fig. 1 wird eine Querverschiebung $b_Q$ des Frontmähwerks 20 realisiert, um eine gewünschte oder vorgegebene Überlappung $b_O$ zu generieren. Diese Überlappung $b_O$ ist entlang der Querrichtung 24 zwischen einer Mähfläche 30 des Frontmähwerks 20 und einer Mähfläche 32 des Heckmähwerks 22-1 gebildet.

Um die Überlappung $b_O$ zu generieren, wird zunächst in Abhängigkeit eines Lenkwinkels $\alpha$ des Fahrzeugs 10 die notwendige Querverschiebung $b_Q$ des Frontmähwerks 20 berechnet. Diese Querverschiebung $b_Q$ wird dann in Abhängigkeit der Übersetzung $i_F$ in die entsprechende Längenänderung $b_{Zyl}$ des Hydraulikzylinders 26 umgerechnet.

Bei der Berechnung der notwendigen Querverschiebung $b_Q$ für die gewünschte oder vorgegebene Überlappung bo wird davon ausgegangen, dass sowohl das Frontmähwerk 20 als auch die beiden Heckmähwerke 22-1, 22-2 in einer standardmäßigen Ausgangslage symmetrisch zur Fahrzeug-Längsachse 18 und ohne Querverschiebung entlang der Querrichtung 24 angeordnet sind. Die nachfolgend erläuterte Berechnung der Querverschiebung $b_Q$ des Frontmähwerks 20 gemäß Fig. 1 lässt sich aber auch entsprechend für asymmetrisch angeordnete Mähwerke anwenden. Für die Berechnung bei der Ausführungsform gemäß Fig. 1 seien noch nachfolgende Randbedingungen definiert.

Bei einer Querverschiebung $b_Q = 0$ ist das Frontmähwerk 20 symmetrisch zur Längsachse 18 angeordnet und für den Lenkwinkel $\alpha$ gilt $\alpha = 0$, d.h. das Fahrzeug 10 befindet sich entlang der Längsrichtung 16 auf einer Geradeausfahrt.

$b_Q > 0$ bedeutet eine Querverschiebung des Frontmähwerks 20 nach links bezüglich einer Vorwärtsfahrt des Fahrzeugs 10. Dies entspricht dem in Fig. 1 dargestellten Fall mit einer Linkskurve entlang der Fahrtrichtung 34. Dabei ist der Lenkwinkel $\alpha$ als $\alpha > 0$ definiert.

$b_Q < 0$ bedeutet eine Querverschiebung des Frontmähwerks 20 nach rechts bezüglich einer Vorwärtsfahrt des Fahrzeugs 10. Dabei ist der Lenkwinkel $\alpha$ als $\alpha < 0$ definiert.

Aus diesen Definitionen ergibt sich für den technisch möglichen Verschiebungsbereich des Frontmähwerks 20 entlang der Querrichtung 24 bei $b_Q > 0$ ein maximaler Grenzwert $b_Q^{max}$ und bei $b_Q < 0$ ein minimaler Grenzwert $b_Q^{Min}$, selbst wenn verfahrensgemäß ein größerer (positiver) oder kleinerer (negativer) Wert für die Querverschiebung $b_Q$ berechnet wird.

Bei $\alpha > 0$ und $b_Q \leq b_Q^{Max}$ gilt:

$$b_Q = \sin(-\arccos((l + l_F)/r_{Hi}))r_{Hi} + r + b_O - b_F/2 \; . \qquad (1)$$

Bei $\alpha < 0$ und $b_Q \geq b_Q^{Min}$ gilt:

$$b_Q = -\sin(-\arccos((l + l_F)/r_{Hi}))r_{Hi} - r - b_O + b_F/2 \; . \qquad (2)$$

Die beiden Kurvenradien $r$ und $r_{Hi}$ bezüglich eines Kurvenmittelpunkts 36 in Fig. 1 sind wie folgt definiert:

$$r = l \; / \; |\tan(\alpha)| \; , \qquad (3)$$

$$r_{Hi} = (l_H^2 + (b_H/2 - r)^2)^{1/2} \; . \qquad (4)$$

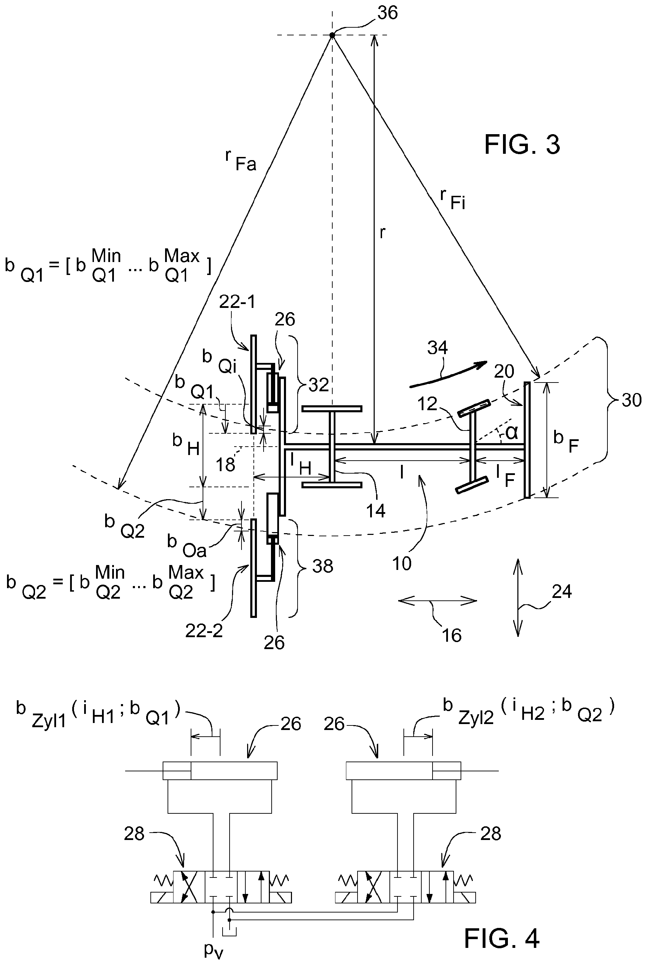

In Fig. 3 befindet sich das Frontmähwerk 20 in einer standardmäßigen, symmetrischen Ausgangslage bezüglich der Längsachse 18, während die beiden Heckmähwerke 22-1 und 22-2 in Querrichtung 24 verschoben werden. Beide Heckmähwerke 22-1 und 22-2 weisen wiederum jeweils einen Aktor in Form eines Hydraulikzylinders 26 auf. Je nach Ansteuerung bewirkt der Aktor bzw. Hydraulikzylinder 26 eine Querverschiebung des jeweiligen Heckmähwerks 22-1 bzw. 22-2 entlang der Querrichtung 24. Ganz allgemein bewirkt eine in Fig. 4 dargestellte spezifische Längenänderung

$b_{Zyl1}$ bzw. $b_{Zyl2}$ einer Arbeitslänge des jeweiligen Hydraulikzylinders 26 eine als notwendig berechnete Querverschiebung $b_{Q1}$ bzw. $b_{Q2}$ des Heckmähwerks 22-1 bzw. 22-2. Dabei ist die spezifische Längenänderung $b_{Zyl1}$ bzw. $b_{Zyl2}$ von einer Übersetzung $i_{H1} = b_{Q1}/b_{Zyl1}$ bzw. $i_{H2} = b_{Q2}/b_{Zyl2}$ zwischen der jeweiligen Querverschiebung $b_{Q1}$ bzw. $b_{Q2}$ und der Längenänderung $b_{Zyl1}$ bzw. $b_{Zyl2}$ abhängig. Die jeweils als erforderlich berechnete Längenänderung $b_{Zyl1}$ bzw. $b_{Zyl2}$ wird erreicht, indem eine Ventileinheit 28 den jeweiligen Hydraulikzylinder 26 entsprechend ansteuert. Dabei steuert die Ventileinheit 28 einen hydraulischen Versorgungsdruck $p_V$ für den Hydraulikzylinder 26. In Fig. 2 sind die Ventileinheiten 28 jeweils als ein 4/3-Wegeventil ausgebildet.

In der Ausführungsform gemäß Fig. 3 werden Querverschiebungen $b_{Q1}$ bzw. $b_{Q2}$ des Heckmähwerks 22-1 bzw. 22-2 realisiert, um eine gewünschte oder vorgegebene Überlappung $b_{Oi}$ bzw. $b_{Oa}$ zu generieren. Die Überlappung $b_{Oi}$ ist entlang der Querrichtung 24 zwischen der Mähfläche 30 des Frontmähwerks 20 und der Mähfläche 32 des Heckmähwerks 22-1 gebildet, während die Überlappung $b_{Oa}$ entlang der Querrichtung 24 zwischen der Mähfläche 30 des Frontmähwerks 20 und einer Mähfläche 38 des Heckmähwerks 22-2 gebildet ist.

Um die Überlappungen $b_{Oi}$ bzw. $b_{Oa}$ zu generieren, wird zunächst in Abhängigkeit eines Lenkwinkels $\alpha$ des Fahrzeugs 10 die notwendige Querverschiebung $b_{Q1}$ bzw. $b_{Q2}$ des Heckmähwerks 22-1 bzw. 22-2 berechnet. Diese Querverschiebungen werden dann in Abhängigkeit der Übersetzung $i_{H1}$ bzw. $i_{H2}$ in die entsprechende Längenänderung $b_{Zyl1}$ bzw. $b_{Zyl2}$ des jeweiligen Hydraulikzylinders 26 umgerechnet.

Bei der Berechnung der notwendigen Querverschiebung für die gewünschte oder vorgegebene Überlappung $b_{Oi}$ und $b_{Oa}$ wird wiederum davon ausgegangen, dass sowohl das Frontmähwerk 20 als auch die beiden Heckmähwerke 22-1, 22-2 in einer standardmäßigen Ausgangslage symmetrisch zur Fahrzeug-Längsachse 18 und ohne Querverschiebung entlang der Querrichtung 24 angeordnet sind. Die nachfolgend erläuterte Berechnung der Querverschiebungen $b_{Q1}$ und $b_{Q2}$ lassen sich aber auch entsprechend für asymmetrisch angeordnete Mähwerke anwenden. Für die Berechnung bei der Ausführungsform gemäß Fig. 3 seien noch nachfolgende Randbedingungen definiert.

Bei einem Lenkwinkel $\alpha = 0$ befindet sich das Fahrzeug 10 entlang der Längsrichtung 16 auf einer Geradeausfahrt und für die Querverschiebungen gilt $b_{Q1} = 0$ bzw. $b_{Q2} = 0$. Ein Lenkwinkel $\alpha > 0$ bedeutet eine Linkskurve entlang der Fahrtrichtung 34 in Fig. 3. Entsprechend bedeutet $\alpha < 0$ eine Rechtskurve entlang der Fahrtrichtung 34.

$b_{Q1} > 0$ bzw. $b_{Q2} > 0$ bedeutet eine Querverschiebung des jeweiligen Heckmähwerks 22-1 bzw. 22-2 hin zur Längsachse 18. $b_{Q1} < 0$ bzw. $b_{Q2} < 0$ bedeutet eine Querverschiebung des jeweiligen Heckmähwerks 22-1 bzw. 22-2 weg von der Längsachse 18. Der technisch mögliche Verschiebungsbereich des jeweiligen Heckmähwerks 22-1 bzw. 22-2 entlang der Querrichtung 24 ist begrenzt durch einen maximalen Grenzwert $b_{Q1}^{Max}$ bzw. $b_{Q2}^{Max}$ bei $b_{Q1} > 0$ bzw. $b_{Q2} > 0$ und einen minimalen Grenzwert $b_{Q1}^{Min}$ bzw. $b_{Q2}^{Min}$ bei $b_{Q1} < 0$ bzw. $b_{Q2} < 0$, selbst wenn verfahrensgemäß ein größerer (positiver) oder kleinerer (negativer) Wert für die jeweilige Querverschiebung $b_{Q1}$ bzw. $b_{Q2}$ berechnet wird.

Neben den vorgenannten Randbedingungen gilt für die notwendige Querverschiebung $b_{Q1}$ des Heckmähwerks 22-1 bei $\alpha < 0$ und $b_{Q1} \leq b_{Q1}^{Max}$:

$$b_{Q1} = -\sin(-\arccos(-l_H/r_{Fa}))r_{Fa} - r - b_{Oa} + b_H/2 \; , \tag{5}$$

und bei $\alpha > 0$ und $b_{Q1} \geq b_{Q1}^{Min}$:

$$b_{Q1} = \sin(-\arccos(-l_H/r_{Fi}))r_{Fi} + r - b_{Oi} - b_H/2 \; . \tag{6}$$

Die Kurvenradien $r$, $r_{Fi}$ und $r_{Fa}$ bezüglich des Kurvenmittelpunkts 36 in Fig. 3 sind wie folgt definiert:
$r$ ist durch Gleichung (3) definiert,

$$r_{Fi} = ((l + l_F)^2 + (b_F/2 - r)^2)^{1/2} \; , \tag{7}$$

$$r_{Fa} = ((l + l_F)^2 + (b_F/2 + r)^2)^{1/2} \; . \tag{8}$$

Für die notwendige Querverschiebung $b_{Q2}$ des Heckmähwerks 22-2 gilt bei $\alpha > 0$ und $b_{Q2} \geq b_{Q2}^{Max}$:

$$b_{Q2} = -\sin(-\arccos(-l_H/r_{Fa}))r_{Fa} - r - b_{Oa} + b_H/2 \; , \tag{9}$$

und bei $\alpha < 0$ und $b_{Q2} \geq b_{Q2}^{Min}$:

$$b_{Q2} = \sin(-\arccos(-l_H/r_{Fi}))r_{Fi} + r - b_{Oi} - b_H/2 \ . \qquad (10)$$

**Patentansprüche**

1. Verfahren zur Querverschiebung ($b_Q$) eines Frontmähwerks (20) und/oder mindestens eines Heckmähwerks (22-1, 22-2) eines landwirtschaftlichen Fahrzeugs (10) entlang einer quer zu einer Längsachse (18) des Fahrzeugs (10) verlaufenden Querrichtung (24), wobei die Querverschiebung ($b_Q$) in Abhängigkeit von einem ermittelten Lenkwinkel ($\alpha$) des Fahrzeugs (10) derart dimensioniert wird, dass während einer Kurvenfahrt des Fahrzeugs (10) eine Überlappung ($b_O$, $b_{Oi}$, $b_{Oa}$) zwischen einer Mähfläche (30) des Frontmähwerks (20) und einer Mähfläche (32, 38) des Heckmähwerks (22-1, 22-2) entlang der Querrichtung (24) generiert wird.

2. Verfahren nach Anspruch 1, **dadurch gekennzeichnet, dass** die Querverschiebung ($b_Q$) in Abhängigkeit von mindestens einer der folgenden Größen durchgeführt wird:

   - einem Radstand (l) des Fahrzeugs (10),
   - einem Front-Längsabstand ($l_F$) entlang der Längsachse (18) zwischen einer Vorderachse (12) des Fahrzeugs (10) und einem Frontmähwerk (20),
   - einem Heck-Längsabstand ($l_H$) entlang der Längsachse (18) zwischen einer Hinterachse (14) des Fahrzeugs (10) und einem Heckmähwerk (22-1, 22-2),
   - einer Mähbreite ($b_F$) des Frontmähwerks (20) entlang der Querrichtung (24),
   - einem Abstand ($b_H$) entlang der Querrichtung (24) zwischen einem ersten Heckmähwerk (22-1) und einem zweiten Heckmähwerk (22-2),
   - einer vorbestimmten Überlappung ($b_O$, $b_{Oi}$, $b_{Oa}$) zwischen dem Frontmähwerk (20) und dem Heckmähwerk (22-1, 22-2) entlang der Querrichtung (24).

3. Verfahren nach einem der vorhergehenden Ansprüche, **dadurch gekennzeichnet, dass** die Querverschiebung ($b_Q$) durch einen Grenzwert ($b_Q^{Min}$, $b_Q^{Max}$; $b_{Q1}^{Min}$, $b_{Q1}^{Max}$; $b_{Q2}^{Min}$, $b_{Q2}^{Max}$) begrenzt wird.

4. Verfahren nach einem der vorhergehenden Ansprüche, **dadurch gekennzeichnet, dass** das Frontmähwerk (20) und/oder das Heckmähwerk (22-1, 22-2) jeweils einen Aktor (28) zur Querverschiebung ($b_Q$) aufweist.

5. Verfahren nach einem der vorhergehenden Ansprüche, **dadurch gekennzeichnet, dass** in Querrichtung (24) beiderseits der Fahrzeug-Längsachse (18) jeweils ein Heckmähwerk (22-1, 22-2) vorgesehen ist.

FIG. 1

FIG. 2

FIG. 3

$^r F_a$

$^r F_i$

$r$

$b_{Q1} = [\,b_{Q1}^{Min} \ldots b_{Q1}^{Max}\,]$

36

22-1

26

$b_{Qi}$

$b_{Q1}$

32

34

20

12

α

$b_F$

30

$b_H$

18

$l_H$

$l$

$l_F$

$b_{Q2}$

14

10

$b_{Oa}$

38

24

$b_{Q2} = [\,b_{Q2}^{Min} \ldots b_{Q2}^{Max}\,]$

22-2

26

16

$b_{Zyl1}\,(\,^i H_1 \,;\, ^b Q_1\,)$

26

26

$b_{Zyl2}\,(\,^i H_2 \,;\, ^b Q_2\,)$

28

28

$p_V$

FIG. 4

**Europäisches Patentamt**
**European Patent Office**
**Office européen des brevets**

# EUROPÄISCHER RECHERCHENBERICHT

**Nummer der Anmeldung**

EP 18 19 2986

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 497 577 A (AGCO SA [FR]) 19. Juni 2013 (2013-06-19) * Seite 2, Absatz 5 - Seite 3, Absatz 6 * * Seite 5, Absatz 3 - Seite 8, Absatz 4 * * Seite 9, Absätze 2,3; Abbildungen 3-7 * ----- | 1-5 | INV. A01B69/08 |
| X | DE 602 25 231 T2 (KVERNELAND ASA [NO]) 12. März 2009 (2009-03-12) * Absätze [0006] - [0009], [0023] - [0039]; Abbildungen 1,2 * ----- | 1,2 | |
| X | DE 44 09 113 C1 (FORTSCHRITT ERNTEMASCHINEN [DE]) 7. September 1995 (1995-09-07) * Spalte 4, Zeile 12 - Spalte 5, Zeile 31; Abbildungen 1-4,9-11 * ----- | 1-5 | |
| A | DE 10 2015 104764 A1 (CLAAS SAULGAU GMBH [DE]) 29. September 2016 (2016-09-29) * Absätze [0004], [0005] * ----- | 3 | |
| A | DE 10 2007 034166 A1 (POETTINGER OHG ALOIS [AT]) 29. Januar 2009 (2009-01-29) * Absätze [0010], [0028] - [0033]; Abbildung 1 * ----- | 1-5 | RECHERCHIERTE SACHGEBIETE (IPC) A01B A01D |

Der vorliegende Recherchenbericht wurde für alle Patentansprüche erstellt

| Recherchenort | Abschlußdatum der Recherche | Prüfer |
|---|---|---|
| München | 18. Januar 2019 | Simson, Guenter |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 18 19 2986

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-01-2019

| Im Recherchenbericht angeführtes Patentdokument | Datum der Veröffentlichung | Mitglied(er) der Patentfamilie | Datum der Veröffentlichung |
|---|---|---|---|
| GB 2497577 A | 19-06-2013 | KEINE | |
| DE 60225231 T2 | 12-03-2009 | DE 60225231 T2<br>EP 1321027 A1 | 12-03-2009<br>25-06-2003 |
| DE 4409113 C1 | 07-09-1995 | DE 4409113 C1<br>FR 2717343 A1 | 07-09-1995<br>22-09-1995 |
| DE 102015104764 A1 | 29-09-2016 | DE 102015104764 A1<br>EP 3072375 A1 | 29-09-2016<br>28-09-2016 |
| DE 102007034166 A1 | 29-01-2009 | DE 102007034166 A1<br>DK 2018803 T3<br>EP 2018803 A1<br>SI 2018803 T1 | 29-01-2009<br>27-08-2018<br>28-01-2009<br>30-10-2018 |

EPO FORM P0461

Für nähere Einzelheiten zu diesem Anhang : siehe Amtsblatt des Europäischen Patentamts, Nr.12/82